# EUROPÄISCHE PATENTANMELDUNG

(11) **EP 3 398 830 A2**
(43) Veröffentlichungstag der Anmeldung: **07.11.2018**
(21) Anmeldenummer: 18000254.5
(22) Anmeldetag: 14.03.2018
(51) Int. Cl.: B62B 1/16

(54) **VORRICHTUNG ZUM SAMMELN VON KEHRICHT, SAMMELAUFNAHME ZUM SAMMELN VON KEHRICHT SOWIE VERFAHREN ZUM AUFSAMMELN VON KEHRICHT**

(30) Priorität: 14.03.2017 DE 102017002403
(71) Anmelder: Heck, Karl Hubert, 52156 Monschau (DE)
(72) Erfinder: Heck, Karl Hubert, DE - 52156 Monschau (DE)
(74) Vertreter: Farago-Schauer, Peter Andreas

(57) **Zusammenfassung**

Die Erfindung betrifft eine Vorrichtung (1, 2; 101) zum Sammeln von Kehricht, insbesondere von Laub, oder dergleichen mit einer Sammelaufnahme (3; 103) zum Aufnehmen von Kehricht, mit einem Rahmenteil (4; 104) umfassend ein Griffteil (5; 105) zum händischen Anheben und Führen der Vorrichtung (1, 2; 101) und/oder umfassend eine lösbaren Koppeleinrichtung (26; 126), und mit Rädern (7; 107) zum Fahren der Vorrichtung (1, 2; 101) auf einem Untergrund (11), bei welcher die Sammelaufnahme (3; 103) mittels einer Gelenkeinrichtung (21; 121) gelenkig mit dem Rahmenteil (4; 104) verbunden ist und bei welcher die Sammelaufnahme (3; 103) eine dem Griffteil (5; 105) abgewandte Vorderseite (12; 112) sowie eine dem Griffteil (5; 105) zugewandte Rückseite (13; 113) aufweist, wobei die Vorrichtung (1, 2; 101) dazu eingerichtet ist, dass die Sammelaufnahme (3; 103) sowohl mit ihrer Vorderseite (12; 112) als auch mit ihrer Rückseite (13; 113) in Richtung (45) des Untergrunds bis auf Bodenniveau absenkbar ist.

## Beschreibung

Die Erfindung betrifft eine Vorrichtung zum Sammeln von Kehricht, insbesondere von Laub, oder dergleichen mit einer Sammelaufnahme zum Aufnehmen von Kehricht, mit einem Rahmenteil umfassend ein Griffteil zum händischen Anheben und Führen der Vorrichtung und mit Rädern zum Fahren der Vorrichtung auf einem Untergrund, bei welcher die Sammelaufnahme mittels einer Gelenkeinrichtung gelenkig mit dem Rahmenteil verbunden ist, und bei welcher die Sammelaufnahme eine dem Griffteil abgewandte Vorderseite sowie eine dem Griffteil zugewandte Rückseite aufweist.

Die Erfindung betrifft auch eine Sammelaufnahme zum Sammeln von Kehricht, insbesondere von Laub, mit einem Sackteil.

Die Erfindung betrifft ferner ein Verfahren zum Aufsammeln von Kehricht oder dergleichen in einer Sammelaufnahme einer auf einem Untergrund fahrbaren Karre.

Gattungsgemäße Vorrichtungen zum Sammeln von Kehricht, insbesondere von Laub sind aus dem Stand der Technik bereits bekannt und werden häufig auch als Laubkarren, Schubkarren, Schiebekarren, Hofkarren, Gartenkarren oder dergleichen bezeichnet.

Eine gattungsgemäße Hofkarre ist beispielsweise von der Kruse Gartentechnik GmbH und Co. KG bekannt, welche eine Kippmulde aufweist, in der Kehricht oder dergleichen gesammelt und abtransportiert werden kann.

Nachteilig bei derartigen Karren ist es jedoch, dass Kehricht, wie etwa Laub oder dergleichen, von einem Untergrund zuerst aufgeklaubt werden muss, um dann in die Sammelaufnahme bzw. Kippmulde abgelegt werden zu können.

Dies ist nicht nur aufwendig, sondern nimmt auch noch mehr Zeit in Anspruch, so dass Gartenarbeiten oder dergleichen sich aufwändiger gestalten.

Es ist Aufgabe vorliegender Erfindung, zumindest die vorstehend genannten Nachteile zu überwinden, insbesondere das Aufsammeln von Kehricht oder dergleichen zu vereinfachen.

Die Aufgabe der Erfindung wird von einer Vorrichtung zum Sammeln von Kehricht, insbesondere von Laub, oder dergleichen, mit einer Sammelaufnahme zum Aufnehmen von Kehricht, mit einem Rahmenteil umfassend ein Griffteil zum händischen Anheben und Führen der Vorrichtung und/oder umfassend eine lösbaren Koppeleinrichtung, und mit Rädern zum Fahren der Vorrichtung auf einem Untergrund gelöst, bei welcher die Sammelaufnahme mittels einer Gelenkeinrichtung gelenkig mit dem Rahmenteil verbunden ist und bei welcher die Sammelaufnahme eine dem Griffteil abgewandte Vorderseite sowie eine dem Griffteil zugewandte Rückseite aufweist, wobei die Vorrichtung dazu eingerichtet ist, dass die Sammeleinrichtung sowohl mit ihrer Vorderseite als auch mit ihrer Rückseite in Richtung des Untergrunds auf Bodenniveau absenkbar ist.

Durch eine derartige Absenkbarkeit ist gewährleistet, dass die Sammelaufnahme insgesamt weiter in Richtung Untergrund verlagerbar und somit näher an dem Untergrund, sprich auf dem Untergrund, anordenbar ist, so dass Kehricht, insbesondere Laub, wesentlich einfacher von dem Untergrund in die Sammelaufnahme verbracht bzw. gekehrt werden kann.

Mit anderen Worten ist die Vorrichtung vorliegend bevorzugt derart eingerichtet, dass Vorder- und Rückseite der Sammelaufnahme gleichzeitig auf dem Untergrund abgesetzt sind, um Kehricht in die Sammelaufnahme verbringen bzw. einkehren zu können.

Somit weist die Vorrichtung mindestens zwei Bedienzustände auf, nämlich einen Fahrzustand, in welchem die Vorrichtung mittels der Räder über dem Untergrund bewegt bzw. gefahren wird, und einen weiteren Zustand, der im Sinne der Erfindung am ehesten als Arbeitszustand beschreibbar ist, in welchem die Sammelaufnahme vorzugsweise plan auf dem Untergrund abgesenkt ist.

Der Begriff "Bodenniveau" beschreibt im Sinne der Erfindung eine Distanz zwischen einem Bodenelement der Sammelaufnahme und dem Untergrund, welche etwa geringer als 5 cm oder 2 cm ist, vorzugsweise gegen 0 cm tendiert oder 0 cm beträgt, so dass sich allerhöchstens ein leicht überbrückbarer Spalt zwischen der Sammelaufnahme und dem Untergrund ergibt.

Jedenfalls befindet sich der Boden der Sammelaufnahme im erfindungsgemäß abgesenkten Zustand (Arbeitszustand) vorliegend unterhalb der Radachse bzw. nur max. 5 cm oder 2 cm oberhalb des unteren Radscheitelpunktes der Räder der Vorrichtung.

Vorzugsweise befindet sich der Boden der Sammelvorrichtung auf dem Höhenniveau des unteren Radscheitelpunktes, so dass im Sinne der Erfindung auch ein besonders rückenschonendes Arbeiten mit der vorliegenden Vorrichtung möglich ist.

Der Begriff "unterer Radscheitelpunkt" beschreibt im Sinne der Erfindung neben der vertikal untersten Stelle eines Rades im Wesentlichen auch den Berührungsbereich zwischen Rad und Untergrund.

Es versteht sich, dass im Sinne vorliegender Erfindung die Vorrichtung zum Sammeln von Kehricht unterschiedlichst ausgebildet sowie zu unterschiedlichsten Zwecken einsetzbar ist.

In erster Linie ist die Vorrichtung zum Aufsammeln oder Einsammeln von Laub vorgesehen und sie kann dementsprechend als Laubkarre bezeichnet werden. Ferner kann die vorliegende Vorrichtung aber auch als Schubkarre, Hofkarre, Gartenkarre oder dergleichen bezeichnet werden, da ihr Einsatz nicht auf das Sammeln von Laub beschränkt ist.

Bevorzugt ist die Vorrichtung gemäß der ursprünglichen Idee händisch bedient, also sie wird mit Muskelkraft angehoben, geschoben, abgestellt usw. Bei entsprechender Ausgestaltung ist es möglich, dass die Vorrichtung hinsichtlich einer Weiterentwicklung zur Gänze oder zumindest in Teilfunktionen auch motorisch unterstützt sein kann.

Der Begriff "Kehricht", erfasst im Sinne der Erfindung jegliche organische oder anorganische Dinge, welche von einem Untergrund aufgeklaubt und gesammelt bzw. entsorgt werden sollen. Im Sinne vorliegender Erfindung betrifft das in erster Linie Laub bzw. Grünzeug, Gartenabfälle oder dergleichen. Der Begriff "Kehricht" erfasst aber auch jegliche sonstige einzusammelnde Dinge, wie beispielsweise Müll, Unrat oder dergleichen.

Mit dem Begriff "Sammelaufnahme" ist jegliche stationär oder mobil an der Vorrichtung verbaute Einrichtung erfasst, welche der Aufnahme von Dingen dient und dafür geeignet ist.

Die Sammelaufnahme weist hierbei eine Vorderseite und eine Rückseite auf, deren Klassifikation in Abhängigkeit der Hauptfahrrichtung, also einer Vorwärtsfahrrichtung und einer Rückwärtsfahrrichtung, definiert ist. Die Hauptfahrrichtung richtet sich hierbei im Wesentlichen nach der Konstruktion der Vorrichtung. Im Regelfall befindet sich das Griffteil in Vorwärtsfahrrichtung gesehen hinter der Sammelaufnahme, das heißt, die Vorrichtung wird normalerweise geschoben; im Gegensatz zu einer Konstruktion, bei welcher sich das Griffteil vor der Sammelaufnahme befindet, wobei die Vorrichtung hierbei in Vorwärtsfahrrichtung gezogen werden würde.

Die Aufgabe der Erfindung wird auch von einer Vorrichtung zum Sammeln von Kehricht, insbesondere von Laub, oder dergleichen mit einer Sammelaufnahme zum Aufnehmen von Kehricht, mit einem Rahmenteil umfassend ein Griffteil zum händischen Anheben und Führen der Vorrichtung und/oder umfassend eine lösbaren Koppeleinrichtung, und mit Rädern zum Fahren der Vorrichtung auf einem Untergrund gelöst, bei welcher die Sammelaufnahme mittels einer Gelenkeinrichtung gelenkig mit dem Rahmenteil verbunden ist und bei welcher die Sammelaufnahme eine dem Griffteil abgewandte Vorderseite sowie eine dem Griffteil zugewandte Rückseite aufweist, wobei die Vorrichtung dazu eingerichtet ist, dass die Vorderseite oder die Rückseite auf dem Untergrund absetzbar und zusätzlich die andere dieser Seiten in Richtung des Untergrunds weiter absenkbar ist, so dass eine Neigung eines Bodenelements der Sammelaufnahme weiter reduzierbar ist, als eine Neigung bei nur einseitig auf dem Untergrund abgesetzter Sammelaufnahme.

Hierdurch lässt sich der Kehricht wesentlich leichter von der insbesondere vollständig auf dem Untergrund abgesetzten Seite, sei es die Vorderseite oder die Rückseite der Sammelaufnahme, in die Sammelaufnahme hineinkehren.

Insofern ist es vorteilhaft, wenn in dem Arbeitszustand die Vorderseite oder die Rückseite auf dem Untergrund abgesetzt ist und die andere dieser Seiten der Sammelaufnahme zumindest in Richtung des Untergrunds weiter absenkbar bzw. abgesenkt ist.

Es kann vorliegend allgemein gesagt werden, dass sich die Erfindung auch durch einen Hebe- und Senkmechanismus auszeichnet, der eine Betätigung, bevorzugt eine händische Betätigung, aufweist, mittels welcher zuerst eine erste Seite der Sammelaufnahme auf dem Untergrund und anschließend eine der ersten Seite gegenüberliegende zweite Seite der Sammelaufnahme auf dem Untergrund abstellbar ist, während die erste Seite abgesetzt auf dem Untergrund verbleibt.

Eine derartig eingerichtete Betätigung umfasst vorzugsweise das Rahmenteil bzw. Stangenelemente hiervon mit dem Griffteil zum händischen Anheben und Führen der Vorrichtung einerseits und andererseits eine lösbare Koppeleinrichtung zum Etablieren einer lösbaren Koppelverbindung zwischen der Betätigung und der Sammelaufnahme bzw. sammelaufnahmeseitigen Bauteilen. Eine entsprechend brauchbare Koppeleinrichtung ist später beispielhaft noch erläutert.

Der besonderes Clou der Vorrichtung ist auch darin zusehen, dass etwa eine beladene Vorrichtung zuerst mit der Vorderseite des Sammelaufnahme von dem Boden abgehoben wird, so dass hierdurch die Gefahr signifikant reduziert oder sogar zur Gänze ausgeschlossen werden kann, dass sich in der Sammelaufnahme befindlicher Kehricht unbeabsichtigt wieder aus der vorderen Öffnung der Sammelaufnahme herausfällt, falls diese Öffnung noch nicht mittels eines Vorderseitenwandelements der Sammelaufnahme oder dergleichen verschlossen ist oder verschlossen werden kann.

Insofern sieht eine besonders bevorzugte Ausführungsvariante vor, dass das Rahmenteil einerseits mit der Gelenkeinrichtung gelenkig an der Vorderseite der Sammelaufnahme angeschlagen ist und das Rahmenteil andererseits mit einem der Gelenkeinrichtung gegenüberliegenden Ende an dem Griffteil derart betätigbar ist, dass beim Anheben der Vorrichtung die Vorderseite der Sammelaufnahme immer vor der Rückseite der Sammelaufnahme von dem Untergrund abhebbar ist.

Ferner ist es vorteilhaft, wenn das Rahmenteil an dem der Gelenkeinrichtung gegenüberliegenden Ende mittels der lösbaren Koppeleinrichtung an der Rückseite der Sammelaufnahme koppelbar sowie von der Rückseite der Sammelaufnahme entkoppelbar ist. Hierdurch kann die vorteilhafte Verwendung nochmals optimiert werden, da die Vorrichtung hierdurch besonders einfach bedienbar ist.

Ist die zwischen der Sammelaufnahme und dem Rahmenteil wirkende lösbare Koppeleinrichtung derart ausgestaltet ist, dass bei gelöster Koppeleinrichtung das Rahmenteil mit seinem der Gelenkeinrichtung gegenüberliegenden erstes Ende bis über die Sammelaufnahme anhebbar ist, kann die Bedienung der Vorrichtung weiter vereinfacht werden.

Eine weitere bevorzugte Ausführungsvariante sieht vor, dass die Vorrichtung dazu eingerichtet ist, dass sowohl die Vorderseite als auch die Rückseite der Sammelaufnahme gleichzeitig auf dem Untergrund abgesetzt sind. Hierdurch kann die Neigung auf ein Minimum reduziert werden bzw. weiter an den "Horizontalverlauf" des Untergrunds angeglichen werden, so dass der einmal in die Sammelaufnahme eingekehrte Kehricht auch in dieser Sammelaufnahme verbleibt, und sich aufgrund einer zu starken Neigung der Sammelaufnahmebodenseite nicht wieder aus der Sammeleinrichtung ungewollt heraus bewegt.

Insofern ist es vorteilhaft, wenn die Vorrichtung dazu eingerichtet ist, dass die dem Untergrund zugewandte Bodenseite der Sammelaufnahme flächig, insbesondere plan bzw. planparallel, auf dem Untergrund abstellbar ist. Hierdurch kann gewährleistet werden, dass der Kehricht besonders einfach in die Sammelaufnahme der Vorrichtung eingebracht bzw. eingekehrt werden kann und dann dort auch verbleibt.

Damit die Sammelaufnahme möglichst vollständig und nahe in Richtung des Untergrunds abgesenkt werden kann, ist es vorteilhaft, wenn unterhalb der Sammelaufnahme ein bauteilfreier Raum der Vorrichtung angeordnet ist. Hierdurch ist eine größtmögliche Bewegungsfreiheit der Sammelaufnahme innerhalb der Vorrichtung und gegenüber dem Untergrund erzielbar.

Somit ist es vorteilhaft, wenn das Rahmenteil derart ausgestaltet ist, dass zwischen den Rädern ein Raum zum Verlagern der Sammelaufnahme vorhanden ist. Hierdurch kann konstruktiv sehr kompakt gewährleistet werden, dass die Sammelaufnahme in Richtung des Untergrunds im Sinne der Erfindung absenkbar und hierbei idealerweise vollständig auf diesem Untergrund absetzbar ist.

Mit anderen Worten bedeutet dies, dass die Räder vorteilhafterweise derart voneinander beabstandet angeordnet sind, dass zwischen ihnen ein bauteilfreier Raum vorhanden ist, in welchem die Sammelaufnahme innerhalb der Vorrichtung derart frei beweglich angeordnet ist, dass sie flach auf dem Untergrund abgesetzt werden kann.

Damit ist die Sammelaufnahme zwischen den Rädern auch derart angeordnet, dass jeweils ein Rad außen neben einem Seitenwandelement der Sammelaufnahme angeordnet ist.

Hierzu ist es zweckmäßig, dass die Vorrichtung eine Einzelradaufhängung aufweist, mittels welcher Räder quer zur Fahrrichtung beabstandet, unabhängig voneinander gelagert an dem Rahmenteil angeordnet sind.

Besonders hervorzuheben ist, dass es vorteilhaft ist, wenn die Vorrichtung zwei voneinander unabhängige Drehlager umfasst, um welche herum die Sammelaufnahme drehbar ist, wobei das erste Drehlager eine Radachse der Vorrichtung und das weitere Drehlager ein an der Sammelaufnahme ausgebildetes Untergrundauflager umfasst.

Hierdurch ist es baulich besonders einfach möglich, zuerst eine Seite, vorzugsweise die Rückseite, der Sammelaufnahme in Richtung eines Untergrunds abzusenken, und anschließend eine weitere Seite, vorzugsweise die Vorderseite, der Sammelaufnahme in Richtung eines Untergrunds abzusenken.

Idealerweise liegt die Sammelaufnahme dann mit ihrer Unterseits auf dem Untergrund plan auf.

Dieses Untergrundauflager kann vielfältig ausgestaltet sein. Hierbei sei daran gedacht, dass das Untergrundauflager durch nahezu beliebig ausgestaltete Bauteile realisiert sein kann, mittels welchen sich die Sammelaufnahme an dem Untergrund abstützen kann.

Bevorzugt ist das Untergrundauflager an der Unterseite der Sammelaufnahme ausgestaltet, beispielsweise durch ein Bodenelement, ein Seitenwandelement oder ein Rückseitenwandelement.

Der Begriff "Fahrrichtung" bezeichnet hierbei die Hauptfahrrichung, also die Vorwärtsfahrrichtung, der Vorrichtung, wenn diese insbesondere händisch vorwärts bewegt wird, wie vorstehend bereits erläutert.

Darüber hinaus sieht eine weitere besonders vorteilhafte Ausführungsvariante vor, dass das Rahmenteil Stangenelemente, vorzugsweise zwei Stangenelemente, aufweist, welche sich von dem Griffteil in Fahrrichtung der Vorrichtung bis zu der Gelenkeinrichtung erstrecken, wobei zwischen den Stangenelementen ein bauteilfreier Raum angeordnet ist, in welchem die Sammelaufnahme verlagerbar angeordnet ist.

Sind die Stangenelemente also jeweils seitlich neben der Sammelaufnahme angeordnet, kann der bauteilfreie Raum konstruktiv einfach an der Vorrichtung bereitgestellt werden.

Es versteht sich, dass die vorliegende Vorrichtung hinsichtlich einer Senk- und Hebe-Mechanik bzw. Getriebemechanik unterschiedlichst ausgestaltet sein kann, um die Sammelaufnahme im Sinne vorliegender Erfindung im Gesamten gegenüber dem Untergrund absenken und anheben zu können.

Beispielsweise sind das Rahmenteil (ein Stangenelement bzw. ein entsprechendes Hebelarmelement) und die Sammelaufnahme derart untereinander wirkverbunden, dass die Sammelaufnahme mittels des Rahmenteils einerseits um einen ersten Drehpunkt, nämlich eine Radachse, und andererseits um einen weiteren Drehpunkt, nämlich um ein Untergrundauflager, drehbar ist.

Das Untergrundauflager ist hierbei bevorzugt durch ein der Sammelaufnahme zugehöriges, entsprechend ausgestaltetes Bauteil, wie beispielsweise, der Rückseite, verkörpert.

Weitere wesentliche Konstruktions- und Funktionsdetails sind insbesondere noch nachfolgend genauer beschrieben.

Einerseits erfährt die Sammelaufnahme innerhalb der Vorrichtung durch die vorliegende Ausgestaltung des Rahmenteils bzw. die spezielle Anordnung der Stangenelemente die erforderliche größtmögliche Bewegungsfreiheit gegenüber dem Untergrund.

Andererseits verkörpert ein in Längserstreckung der Vorrichtung verlaufendes Stangenelement einen guten und einfach konstruierten Hebelarm, um die Sammelaufnahme an einem dem Griffteil gegenüberliegenden Ende des Stangenelements zu manipulieren, sprich dort die Sammelaufnahme, also an der Vorderseite, erst einmal abzusenken und anschließend wieder anzuheben.

Es versteht sich, dass das Rahmenteil insbesondere hinsichtlich seiner Stangenelemente nahezu beliebig ausgestaltet sein kann. Besonders günstige Hebelverhältnisse können an der Vorrichtung hinsichtlich des Rahmenteils erreicht werden, wenn die Stangenelemente s-förmig gebogen sind.

Die Konstruktion der vorliegenden Vorrichtung kann weiter vereinfacht werden, wenn jeweils ein Rad zwischen dem Griffteil und der Gelenkeinrichtung an einem Stangenelement angeordnet ist. Hierbei bildet die Radachse des Rades dann eine gute Hebelachse, um welche mittels des Stangenelements gehebelt werden kann.

Besonders vorteilhaft ist es, wenn an einer Wendestelle des Stangenelementverlaufs eine Radachse an dem Stangenelement gelagert ist, so dass Bedienkräfte der Vorrichtung, welche vorzugsweise ja händisch aufgebracht werden, vorteilhaft reduziert werden können.

Eine weitere sehr zweckmäßige Ausführungsvariante sieht vor, dass an dem Rahmenteil eine Radachse der Räder der Vorrichtung ortsfest angeordnet ist, wobei die Radachse einen ersten Drehpunkt der Vorrichtung ist, wobei der erste Drehpunkt das Rahmenteil in einen ersten Hebelarm und in einen zweiten Hebelarm unterteilt, wobei der erste Hebelarm sich von dem Griffteil und/oder der lösbaren Koppeleinrichtung bis zu dem Drehpunkt erstreckt und wobei der zweite Hebelarm sich von einer Gelenkeinrichtung an der Vorderseite der Sammelaufnahme bis zu dem Drehpunkt der Radachse erstreckt. Hierdurch können selbst schwere Lasten mittels der Vorrichtung einfach gehandhabt werden.

Besonders vorteilhaft ist es in diesem Zusammenhang, wenn das Rahmenteil derart gegenüber der Sammelaufnahme angeordnet ist, dass das Griffteil und/oder der lösbaren Koppeleinrichtung bis über die Sammelaufnahme anhebbar ist, während die an dem Rahmenteil befestigte Seite der Sammelaufnahme auf dem Untergrund abgesetzt ist. Hierdurch kann ein Absenken bzw. auch ein Anheben der zweiten Seite der Sammelaufnahme ebenfalls sehr einfach mittels der Griffeinrichtung der Vorrichtung erfolgen.

Des Weiteren ist es vorteilhaft, wenn die Sammelaufnahme mit einer der zwischen der Sammelaufnahme und dem Rahmenteil wirkenden Gelenkeinrichtung gegenüberliegende Seite der Sammelaufnahme fest, aber lösbar an dem Rahmenteil angeordnet ist. Hierdurch ist es im gelösten bzw. entkoppelten Zustand möglich, das Rahmenteil gegenüber der Sammelaufnahme zu schwenken, insbesondere wenn eine Seite, vorzugsweise die Rückseite, der Sammelaufnahme bereits auf dem Untergrund abgesetzt ist.

Um die Sammelaufnahme und das Rahmenteil fest, aber lösbar miteinander zu verbinden, weist die Vorrichtung eine entsprechende Koppeleinrichtung auf.

Aus diesem Grund sieht eine weitere vorteilhafte Ausführungsvariante auch vor, dass eine zwischen der Sammelaufnahme und dem Rahmenteil wirkende lösbare Koppeleinrichtung derart ausgestaltet ist, dass bei gelöster Koppeleinrichtung das Rahmenteil mit seinem der Gelenkeinrichtung gegenüberliegenden erstes Ende (Griffteil) bis über die Sammelaufnahme anhebbar ist. Hierdurch können einerseits das dem Griffteil gegenüberliegende weitere Ende des Rahmenteils gesenkt bzw. angehoben und andererseits letztendlich auch die Neigung der Sammelaufnahme gegenüber einer horizontalen bzw. insbesondere gegenüber dem Untergrund sehr gut kontrolliert reduziert werden.

Die Handhabung der Vorrichtung kann weitersignifikant vereinfacht werden, wenn die zwischen der Sammelaufnahme und dem Rahmenteil wirkende Gelenkeinrichtung im Bereich der Vorderseite der Sammelaufnahme angeordnet ist.

Insgesamt ist es hierdurch gut ermöglicht, dass zuerst die Rückseite der Sammelaufnahme auf dem Untergrund abgesetzt wird, dass dann das Rahmenteil an dieser abgesetzten Seite der Sammelaufnahme mittels der lösbaren Koppeleinrichtung von der Sammelaufnahme entkoppelt wird, und dass anschließend die Vorderseite der Sammelaufnahme ebenfalls in Richtung des Untergrunds abgesenkt wird.

Es versteht sich des Weiteren, dass die Sammelaufnahme zum Aufnehmen von Kehricht ebenfalls nicht nur unterschiedlichst ausgestaltet sondern an der Vorrichtung, insbesondere an dem Rahmenteil, auch unterschiedlichst angeordnet sein kann.

Insbesondere ist die Sammelaufnahme zumindest mittels der Gelenkeinrichtung zwar drehbar, aber dennoch fest mit dem Rahmenteil verbunden.

Es ist jedoch vorteilhaft, wenn die Sammelaufnahme auswechselbar an dem Rahmenteil angeordnet ist, so dass etwa eine befüllte Sammelaufnahme gegen eine leere Sammelaufnahme problemlos ausgetauscht werden kann, so dass die Vorrichtung schneller wieder einsatzbereit ist.

Umfasst die Vorrichtung ferner ein Trageteil zum Tragen der Sammelaufnahme, welche einerseits mit der Gelenkeinrichtung drehbar und andererseits mit einer Koppeleinrichtung fest, aber lösbar an dem Rahmenteil gelagert ist, kann die Sammelaufnahme baulich einfach mithilfe des Trageteils in die Vorrichtung auswechselbar integriert werden.

Dann somit kann das Trageteil an der Vorrichtung bzw. dem Rahmenteil verbleiben, während die Sammelaufnahme jedoch ausgetauscht wird.

Somit ist die Auswechselbarkeit der Sammelaufnahme konstruktiv besonders einfach gelöst.

Umfasst die Vorrichtung ein Trageteil ist es vorteilhaft, wenn die Vorrichtung dazu eingerichtet ist, dass dieses Trageteil sowohl mit seiner Vorderseite als auch mit seiner Rückseite in Richtung des Untergrunds absenkbar ist.

Ferner ist es vorteilhaft, wenn die Vorrichtung kumulativ oder alternativ dazu eingerichtet ist, dass die Vorderseite oder die Rückseite des Trageteils auf dem Untergrund absetzbar und zusätzlich die andere dieser Seiten in Richtung des Untergrunds weiter absenkbar ist, so dass eine Neigung des Trageteils weiter reduzierbar ist, als eine Neigung bei einseitig auf dem Untergrund abgesetztem Trageteil.

In diesem Zusammenhang ist es ebenfalls vorteilhaft, wenn die Vorrichtung kumulativ oder alternativ dazu eingerichtet ist, dass sowohl die Vorderseite als auch die Rückseite des Trageteils gleichzeitig auf dem Untergrund abgesetzt sind bzw. wenn das Trageteil flächig auf dem Untergrund absetzbar ist.

Wie vorstehend bereits erwähnt, kann die vorliegende Sammelaufnahme unterschiedlichst konstruiert sein.

Beispielsweise umfasst die Sammelaufnahme ein Behälterteil, insbesondere einstückiges Behälterteil, so dass die Sammelaufnahme sehr robust an der Vorrichtung bereitgestellt werden kann.

Ein derartiges Behälterteil kann hinsichtlich seiner Gestalt und bzw. Formgebung nahezu beliebig ausgeführt sein.

Beispielsweise ist das Behälterteil starr oder klappbar ausgeführt. Ein starrer Behälter kann äußerst stabil gebaut werden, während ein klappbarer Behälter insbesondere für Transportzwecke in ein möglichst kleines Transportvolumen überführt werden kann.

Ferner sei daran gedacht, dass die Vorrichtung ein Trageteil mit einem Bodenelement, mit Seitenwandelementen sowie mit einem Vorderwandelement und/oder mit einem Rückwandelement umfasst, welche insbesondere fest, aber lösbar an dem Trageteil integriert sind. Hierdurch lässt sich eine sehr stabile Sammelaufnahme realisieren.

Vorzugsweise sind die einzelnen Elemente einzeln lösbar mit dem Trageteil wirkverbunden, wodurch eine besonders einfach bauende Sammelaufnahme an der Vorrichtung bereitgestellt werden kann.

Kumulativ oder alternativ ist es vorteilhaft, wenn die Sammelaufnahme ein Sackteil umfasst.

Entweder kann das Sackteil auf ein Bodenelement bzw. in ein Behälterteil eingelegt werden, so dass es vorteilhaft unterbaut ist. Oder das Sackteil kann auch lediglich in einem entsprechend eingerichteten Trageteil der Vorrichtung eingehängt sein.

Zweckmäßigerweise umfasst das Trageteil Befestigungsmittel zur lösbaren Befestigung des Sackteils an der Vorrichtung, so dass das Sackteil schnell auswechselbar in der Vorrichtung integriert ist.

Auch derartige Befestigungsmittel können vielfältig bereitgestellt werden. Eine besonders robuste und einfach realisierbare Ausführungsvariante sieht vor, dass die Befestigungsmittel Hakenelemente zum Einhaken von Einhakösen des Sackteils umfassen.

Es versteht sich, dass derartige Einhakösen kumulativ oder alternativ auch an dem Trageteil vorgesehen sein können und Hakenelemente dann entsprechend dem Sackteil zugeordnet sind.

Ist die Sammelaufnahme an ihrer Vorderseite und/oder an ihrer Rückseite öffenbar und schließbar ausgestaltet, kann die Sammelaufnahme nach dem Befüllen vorteilhaft verschlossen werden, so dass die Gefahr verringert wird, dass sich in der Sammelaufnahme befindlicher Kehricht unbeabsichtigt in die Umgebung gelangt.

Die Aufgabe der Erfindung wird auch von einer Sammelaufnahme zum Sammeln von Kehricht, insbesondere von Laub, mit einem Sackteil gelöst, wobei das Sackteil Befestigungsmittel umfasst, mittels welchem das Sackteil fest, aber lösbar in eine Vorrichtung zum Sammeln von Kehricht, insbesondere in die vorliegende Vorrichtung, integrierbar ist.

Vorteilhafterweise umfassen die Befestigungsmittel eine Vielzahl an Hakenelementen, Einhakösen, Klettverbindern oder dergleichen, so dass eine schnelle Auswechselbarkeit an der Vorrichtung zum Sammeln von Kehricht gewährleistet werden kann.

Eine auch ohne die übrigen Merkmale der Erfindung vorteilhafte Ausführungsvariante schlägt ein begehbares Sackteil vor, um darin befindliches Kehricht oder dergleichen manuell zu verdichten.

Um das Sackteil an der Vorrichtung bzw. an der Sammelaufnahme besonders gut abstützen zu können, ist es vorteilhaft, wenn die Sammelaufnahme ein Bodenelement aus einem Draht- und/oder Netzgeflecht aufweist. Ein Draht- und/oder Netzgeflecht kann gewichtsmäßig relativ leicht gehalten werden, so dass die Vorrichtung hierdurch nicht wesentlich schwerer wird. Ein derartiges Netzgeflecht kann beispielsweise aus Nylon oder dergleichen hergestellt sein.

Insofern ist es vorteilhaft, wenn die Sammelaufnahme Befestigungseinrichtungen für das Draht- und/oder Netzgeflecht aufweist, welche mit komplementär ausgestalteten Befestigungsmitteln am Draht- und/oder Netzgeflecht zuverlässig wechselwirken können.

Besonders vorteilhaft ist es auch, wenn sich die Vorrichtung oder die Sammelaufnahme durch eine Klemmeinrichtung zum Klemmen eines eine Öffnung des Sackteils begrenzenden Randes des Sackteils auszeichnet, wobei die Klemmeinrichtung eine schwenkbare Klemmleiste umfasst, welche schwenkbar an der Vorderseite der Sammelaufnahme angeordnet ist. Hierdurch kann das Sackteil einerseits schnell mit der Vorderseite der Sammelaufnahme lösbar verbunden werden. Andererseits hat das Sackteil einen besonders sicheren Halt an der Sammelaufnahme, wenn Kehricht über die Vorderseite der Sammelaufnahme in die Öffnung des Sackteil eingebracht wird.

Darüber hinaus ist es vorteilhaft, wenn das Sackteil an einem eine Öffnung des Sackteils begrenzenden Randes des Sackteils ein Klemmelement aufweist, wodurch das Sackteil besonders betriebssicher mit der Klemmeinrichtung der Sammelaufnahme zusammenarbeiten kann.

Weist das Sackteil an einer dem Klemmelement gegenüberliegenden Sackteilseite ein oder mehrere Verschlusseinrichtungen zum zusätzlichen Öffnen des Sackteils auf, ist das in der Sammelaufnahme positionierte Sackteil besonders gut zugänglich. Insbesondere ein Begehen des Sackteils ist hierdurch erst besonders gut und möglichst vollständig möglich.

Ferner wird die Aufgabe der Erfindung noch von einem Verfahren zum Aufsammeln von Kehricht oder dergleichen in einer Sammelaufnahme einer auf einem Untergrund fahrbaren Karre bzw. der vorliegenden Vorrichtung gelöst, bei welchem mittels einer ersten Rotationsbewegung eines Rahmenteils der Karre in eine erste Rotationsrichtung um eine Rotationsachse, insbesondere eine Radachse, des Karrens eine erste Sammelaufnahmeseite (Rückseite) auf dem Untergrund abgesetzt wird, bei welchem dann das Rahmenteil im Bereich der ersten Sammelaufnahmeseite (Rückseite) von der Sammelaufnahme entkoppelt wird, und bei welchem anschließend mittels einer weiteren Rotationsbewegung des Rahmenteils in eine der ersten Rotationsrichtung entgegengesetzte, weitere Rotationsrichtung um die Rotationsachse, insbesondere Radachse, eine zweite Sammelaufnahmeseite ebenfalls auf dem Untergrund abgesetzt wird, während die erste Sammelaufnahmeseite (Rückseite) bereits auf dem Untergrund abgesetzt ist.

Durch ein derartiges Bedienverfahren des Karrens kann der Kehricht besonders einfach in die Sammelaufnahme verbracht bzw. eingekehrt werden.

Im Umkehrschluss bedeutet dies aber auch, dass beim Anheben der Vorrichtung zuerst die Vorderseite der Sammelaufnahme von dem Untergrund abgehoben wird, so dass nahezu ausgeschlossen werden kann, dass eine kritische Menge an Kehricht unbeabsichtigt aus der Sammelaufnahme bzw. aus dem Sackteil fällt.

Das hier vorgeschlagene Verfahren kann vorteilhaft weiterentwickelt werden, wenn mittels des Rahmenteils die Sammelaufnahme um einen ersten Drehpunkt, nämlich um eine Radachse des Karrens, gedreht wird, um hierdurch die erste Sammelaufnahmeseite (Rückseite) auf dem Untergrund abzusetzen, und anschließend um einen weiteren Drehpunkt, nämlich um ein zwischen der Sammelaufnahme und dem Untergrund erzeugtes Untergrundauflager, drehbar ist, um eine der ersten Sammelaufnahmeseite gegenüberliegende, weitere Sammelaufnahmeseite zusätzlich auf dem Untergrund abzusetzen, wobei dieser weitere Drehpunkt durch Absetzen der ersten Sammelaufnahmeseite auf dem Untergrund erzeugt wird.

Das vorliegende Verfahren zum Aufsammeln von Kehricht kann besonders einfach umgesetzt werden, wenn eine zwischen der Sammelaufnahme und dem Rahmenteil wirkende Gelenkeinrichtung in Richtung des Untergrunds abgesenkt wird, wenn zuvor eine Seite der Sammelaufnahme auf dem Untergrund bereits abgesetzt wurde.

Besonders vorteilhaft ist es, wenn eine Neigung eines Bodenteils der Sammelaufnahme gegenüber einer horizontalen, insbesondere gegenüber dem Untergrund, weiter verringert wird, wenn zuvor eine Seite der Sammelaufnahme bereits auf dem Untergrund abgesetzt wurde.

Es versteht sich, dass die Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Weitere Merkmale, Effekte und Vorteile vorliegender Erfindung werden anhand anliegender Zeichnung und folgender Beschreibung erläutert, in welchen beispielhaft eine Vorrichtung zum Sammeln von Kehricht dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine Seitenansicht einer Vorrichtung zum Sammeln von Kehricht in einem Fahrzustand, in welchem die Vorrichtung mit einem Untergrund lediglich durch Räder verbunden ist;
- Figur 2: schematisch eine weitere Seitenansicht der in der Figur 1 gezeigten Vorrichtung in einer Absetzbewegung der Vorrichtung, bei welcher die Vorrichtung mit der Rückseite der Sammelaufnahme auf dem Untergrund abgestellt wird;
- Figur 3: schematisch eine nochmalige Seitenansicht der in den Figuren 1 und 2 gezeigten Vorrichtung mit einer vollständig auf dem Untergrund abgesenkten bzw. abgesetzten Sammelaufnahme;
- Figur 4: schematisch eine alternative Vorrichtung zum Sammeln von Kehricht in einem Fahrzustand;
- Figur 5: schematisch eine weitere Seitenansicht der in der Figur 4 gezeigten alternativen Vorrichtung in einer Absetzbewegung der Vorrichtung;
- Figur 6: schematisch eine nochmalige Seitenansicht der in den Figuren 4 und 5 gezeigten alternativen Vorrichtung mit einer vollständig auf dem Untergrund abgesenkten bzw. abgesetzten Sammelaufnahme;
- Figur 7: schematisch eine Seitenansicht einer Klemmeinrichtung zum Klemmen eines Sackteils zumindest teilweise an der Sammelaufnahme in einem offenen Betriebszustand; und
- Figur 8: schematisch eine weitere Seitenansicht der in der Figur 7 gezeigten Klemmeinrichtung in einem geschlossenen Betriebszustand.

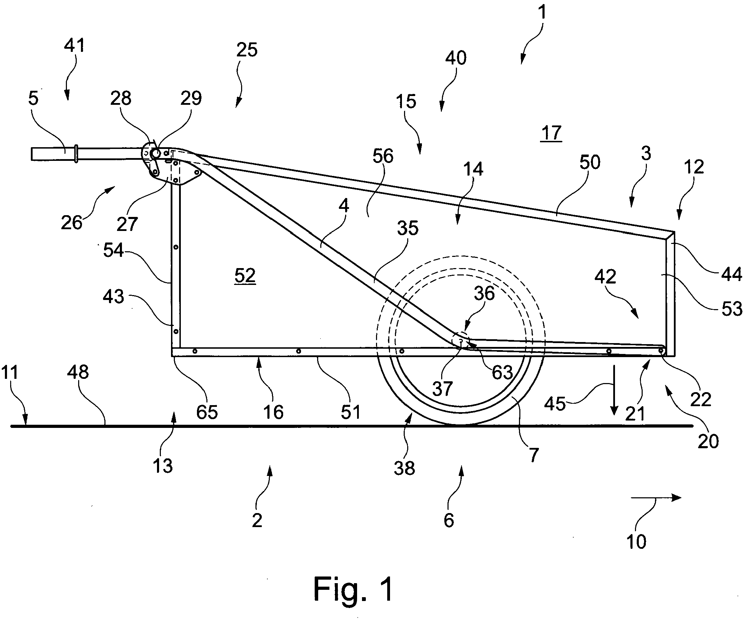

Die in den Figuren 1 bis 3 gezeigte Vorrichtung 1 zum Sammeln von Kehricht ist zumindest in diesem Ausführungsbeispiel als Laubkarre 2 zum Sammeln von Laub ausgestaltet.

Die Vorrichtung 1 weist eine Sammelaufnahme 3 zum Aufnehmen von Kehricht bzw. Laub oder dergleichen auf und sie ist mit einem Rahmenteil 4 ausgestattet, welches ein Griffteil 5 umfasst, mittels welchem die Vorrichtung 1 händisch angehoben geführt und abgesetzt werden kann.

Ferner umfasst die Vorrichtung 1 noch ein Fahrwerk 6, welches sich im Wesentlichen durch zwei Räder 7 auszeichnet, von welchen - in Vorwärtsfahrrichtung 10 gesehen - lediglich das rechte Rad 7 gezeigt ist. Mittels der Räder 7 kann die Vorrichtung 1 problemlos auf einem Untergrund 11 bewegt werden, um die Sammelaufnahme 3 örtlich beliebig verfahren zu können.

Die Sammelaufnahme 3 besitzt wieder in Vorwärtsfahrrichtung 10 gesehen eine Vorderseite 12 sowie eine Rückseite 13, eine rechte Seite 14, eine linke Seite 15 (hier nicht sichtbar), eine Unterseite 16 sowie eine Oberseite 17.

Die Sammelaufnahme 3 ist in einem Bereich 20 ihrer Vorderseite 12 mittels einer Gelenkeinrichtung 21 gelenkig an dem Rahmenteil 4 befestigt.

Konstruktiv einfach ist die Gelenkeinrichtung 21 in diesem Ausführungsbeispiel mittels einer Bolzen-Naben-Verbindung 22 realisiert, wobei es keine Rolle spielt, ob der Bolzen (nicht explizit beziffert) oder die Nabe (nicht explizit beziffert) an der Sammelaufnahme 3 bzw. an dem Rahmenteil 4 ausgestaltet ist.

Jedenfalls ist die Gelenkeinrichtung 21 an der Vorderseite 12 der Sammelaufnahme 3 realisiert.

In einem weiteren Bereich 25 an der Rückseite 13 der Sammelaufnahme 3 ist noch eine Koppeleinrichtung 26 an der Vorrichtung 1 vorgesehen, mittels welcher die Sammelaufnahme 3 mit dem Rahmenteil 4 gekoppelt bzw. von dem Rahmenteil 4 entkoppelt werden kann.

Konstruktiv einfach besitzt diese Koppeleinrichtung 26 an der Sammelaufnahme 3 angebrachte Flanschteile 27. Genauer gesagt, ist jeweils an der rechten Seite 14 und der linken Seite 15 der Sammelaufnahme 3 jeweils ein derartiges Flanschteil 27 befestigt.

Das jeweilige Flanschteil 27 weist ein daran drehbeweglich gelagertes Rastnasenelement 28 auf, welches an einem Querbolzen 29 einrasten kann, wobei der Querbolzen 29 an dem Rahmenteil 4 angeordnet ist, oder durch das Rahmenteil 4 selbst ausgestaltet ist.

Somit ist die Sammelaufnahme 3 in ihrem weiteren Bereich 25 an der Rückseite 13 mittels der Koppeleinrichtung 26 fest, aber lösbar an dem Rahmenteil 4 festlegbar.

Das Rahmenteil 4 ist in diesem Ausführungsbeispiel denkbar einfach ausgestaltet, nämlich es besteht im Wesentlichen aus zwei Stangenelementen 35, wobei aufgrund der bezüglich der Figuren 1 bis 3 gewählten Seitenansicht der Vorrichtung 1 nur das rechte Stangenelement 35 der Stangenelemente 35 dargestellt und beschrieben ist.

Die Stangenelemente 35 sind in diesem Ausführungsbeispiel gleich ausgebildet.

Das Stangenelement 35 erstreckt sich von dem Griffteil 5 bzw. der Koppeleinrichtung 26 in Vorwärtsfahrrichtung 10 der Vorrichtung 1 gesehen bis zu der Gelenkeinrichtung 21 im Wesentlichen s-förmig.

An einer unteren Wendestelle 36 des s-förmigen Stangenelementverlaufs ist an dem jeweiligen Stangenelement 35 jeweils eine Radachse 37 angeordnet, an welcher jeweils ein Rad 7 an dem jeweiligen Stangenelement 35 gelagert ist.

Somit sind nicht nur die zwei Stangenelemente 35 jeweils seitlich neben der Sammelaufnahme 3 platziert, sondern auch jeweils eines der Räder 7.

Insofern weist die Vorrichtung 1 insgesamt eine Einzelradaufhängung 38 auf, mittels welcher die Räder 7 quer zur Fahrrichtung 10 beabstandet und unabhängig voneinander an dem Rahmenteil 4 angeordnet sind. Mit anderen Worten ist jedes der Räder 7 mittels der dazugehörigen Radachse 37 nur mit einem der Stangenelemente 35 verbunden.

Mittels des Querbolzens 29 sind die Stangenelemente 35 im Bereich einer weiteren Wendestelle 39 des Stangenelementverlaufs untereinander verbunden, wodurch das Rahmenteil 4 eine gute Stabilität erfährt.

Ferner sind die Rastnasenelemente 28 besonders einfach an einem einzigen Querbolzen 29 einrastbar.

Im Bereich 20 sind die beiden Stangenelemente 35 mittels der Gelenkeinrichtung 21 über die Sammelaufnahme 3 miteinander verbunden, wodurch das Rahmenteil 4 ausreichend stabil ausgestaltet ist.

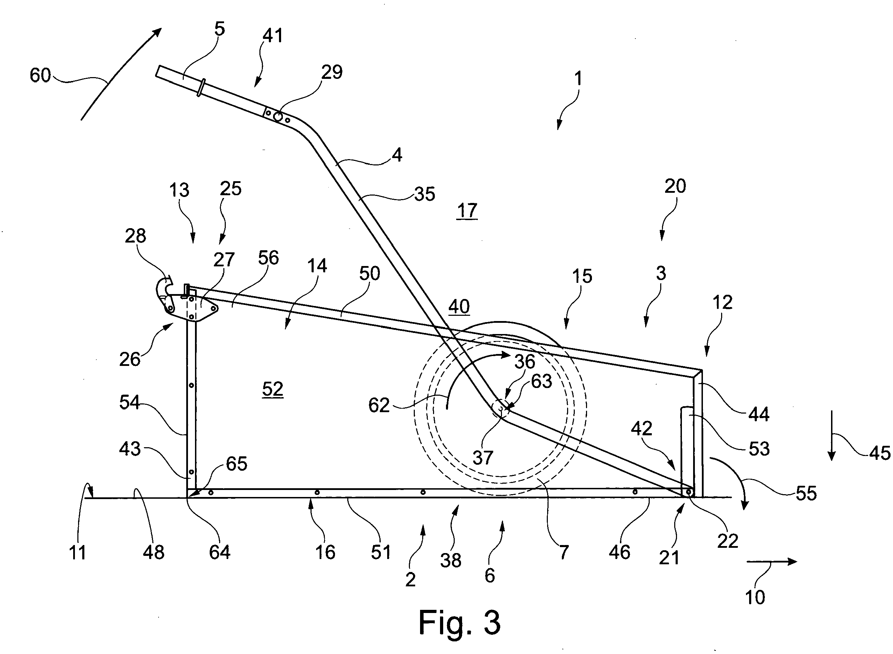

Durch die vorstehend bereits beschriebene Einzelradaufhängung 38 und die konstruktiv einfachen Verbindungen der beiden Stangenelemente 35 mittels des Querbolzens 29 im Bereich des Griffteils 5 sowie der Bolzen-Naben-Verbindung 22 im Bereich 20 der Gelenkeinrichtung 21 ergibt sich ein ausreichend großer bauteilfreier Raum 40 innerhalb der Vorrichtung 1, in welchem die Sammelaufnahme 3 nun problemlos von einem Fahrzustand der Vorrichtung 1 gemäß der Darstellung nach der Figur 1 in einen Arbeitszustand der Vorrichtung 1 gemäß der Darstellung nach der Figur 3 hin und her überführbar ist.

Somit besitzt die Vorrichtung 1 einen zwischen den zwei Stangenelementen 35 bzw. zwischen den Rädern 7 bauteilfreien Raum 40, in welchem die Sammelaufnahme 3 frei verlagerbar angeordnet ist.

Jedenfalls ist das Rahmenteil 3 derart gegenüber der Sammelaufnahme 3 angeordnet, dass das jeweilige Griffteil 5 bzw. das der Gelenkeinrichtung 21 jeweils gegenüberliegende Ende 41 des Rahmenteils 4 (Stangenelement 35 mit jeweils zwei Enden 41 (freies Ende) und 42 (angeschlagenes Ende)) bis über die Sammelaufnahme 3, insbesondere bis über eine erste Sammelaufnahmeseite 43, anhebbar ist, während das andere Ende 42 (angeschlagenes Ende) des Rahmenteils 4 (Stangenelement 35) bzw. die an dem Rahmenteil 4 gelenkig befestigte andere Sammelaufnahmeseite 44, welche in diesem Ausführungsbeispiel die Vorderseite 12 der Sammelaufnahme 3 ist, auf dem Untergrund 11 abgesetzt ist.

Der vorstehende beispielhaft an diesem Ausführungsbeispiel erläuterte Mechanismus führt in konstruktiv einfacher Weise dazu, dass die Vorrichtung 1 insgesamt dazu eingerichtet ist, dass die Sammelaufnahme 3 sowohl mit ihrer Vorderseite 12 als auch mit ihrer Rückseite 13 in Richtung 45 des Untergrunds 11 absenkbar ist.

Ferner ist die hier beispielhaft beschriebene Vorrichtung 1 dazu eingerichtet, dass die Rückseite 13 der Sammeleinrichtung 3 auf dem Untergrund 11 absetzbar und zusätzlich die andere Sammelaufnahmeseite 44, nämlich die Vorderseite 12, in Richtung 45 des Untergrunds 11 weiter absenkbar ist, so dass eine Neigung 46 der Sammelaufnahme 3 weiter reduzierbar ist, als noch eine Neigung 47 bei nur einseitig auf dem Untergrund 11 abgesetzter Sammelaufnahme 3. Gemäß der Darstellung nach der Figur 3 ist die Neigung 46 null.

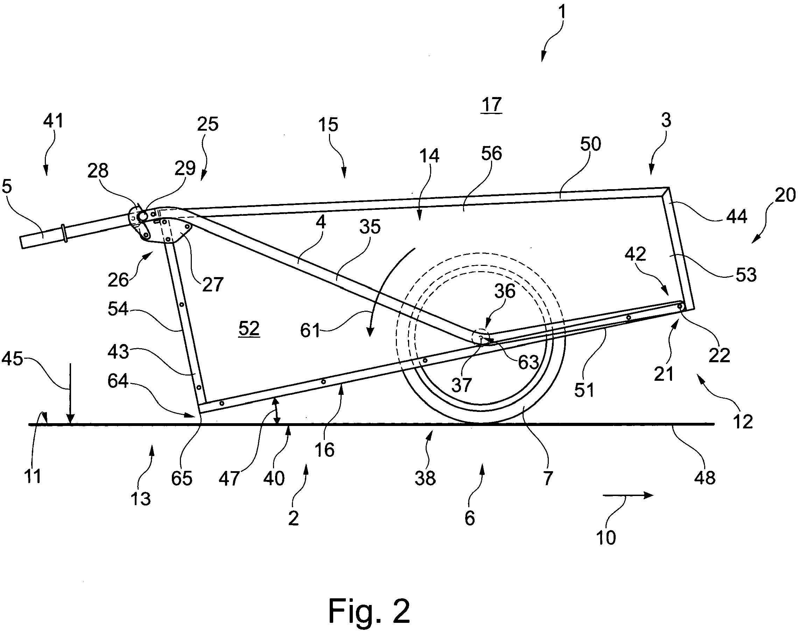

Mit anderen Worten bedeutet dies, dass die Sammelaufnahme 3 bei einseitig auf dem Untergrund 11 abgestellter Sammelaufnahme 3 eine übliche Neigung 47 gegenüber einer Horizontalen 48 bzw. gegenüber dem Untergrund 11 hat, wie dies beispielsweise gemäß der Darstellung nach der Figur 2 gezeigt ist.

Wird jedoch auch die gegenüberliegende, andere Sammelaufnahmeseite 44, also bei diesem Ausführungsbeispiel die Vorderseite 12, in Richtung 45 des Untergrunds 11 abgesenkt bzw. wie gemäß der Darstellung nach der Fig. 3 auf dem Untergrund 11 abgesetzt, ist die weiter reduzierte Neigung 46 signifikant gegenüber der üblichen, normalen Neigung 47 reduziert. Gemäß der idealisierten Darstellung nach der Figur 3 ist die weiter reduzierte Neigung 46 gleich null, da der Untergrund 11 mit der fiktiven Horizontalen 48 zusammenfällt.

Insofern ist die in diesem Ausführungsbeispiel beispielhaft gezeigte Vorrichtung 1 dazu eingerichtet, dass sowohl die Vorderseite 12 als auch die Rückseite 13 der Sammelaufnahme 3 gleichzeitig auf dem Untergrund 11 abgesetzt sind.

Die Sammelaufnahme 3 ist in diesem Ausführungsbeispiel derart ausgestaltet, dass sie ein zusätzliches Trageteil 50 umfasst, welches in diesem Ausführungsbeispiel ein weiterer Bestandteil der Sammelaufnahme 3 darstellt.

Mittels dieses Trageteils 50 ist die Sammelaufnahme 3 einerseits mit der zuvor bereits erläuterten Gelenkeinrichtung 21 drehbar und andererseits mit der ebenfalls vorstehend bereits beschriebenen Koppeleinrichtung 56 fest, aber lösbar an dem Rahmenteil 4 gelagert.

Weitere Bestandteile der hier beispielhaft gezeigten Sammelaufnahme 3 sind ein Bodenelement 51, zwei Seitenwandelemente 52, wobei hier nur das rechte Seitenwandelement 52 gezeigt und beziffert ist, sowie ein Vorderseitenwandelement 53 und ein Rückseitenwandelement 54.

Die Oberseite 17 besitzt kein vergleichbares Wandelement, sie kann jedoch bei geeigneter Ausgestaltung mittels eines solchem, eines Netzes oder einer Plane abgedeckt werden.

Das Vorderseitenwandelement 53 ist hierbei im Bereich der Gelenkeinrichtung 21 schwenkbar gelagert, wobei vorliegend die Gelenkeinrichtung 21 derart ausgestaltet ist, dass hierfür die eingangs beschriebenen Bolzen-Nabenverbindung 22 genutzt werden kann.

Insofern ist es möglich, das Vorderseitenwandelement 53 gemäß der Pfeilrichtung 55 derart herunterzuschwenken, dass die Vorderseite 12 der Sammelaufnahme 3 geöffnet werden kann, so dass insbesondere bei auf dem Untergrund 11 abgesetzter Sammelaufnahme 3 (vgl. Figur 3) Kehricht bzw. Laub oder dergleichen einfach von dem Untergrund 11 in die Sammelaufnahme 3 eingekehrt werden kann.

Entsprechend kann das Vorderseitenwandelement 53 wieder entgegen der Pfeilrichtung 55 hochgeschwenkt und mit einer hier nicht weiter dargestellten Verriegelungseinrichtung verriegelt werden, um die Sammelaufnahme 3 nach getaner Arbeit wieder zu verschließen.

Die so aufgebaute Sammelaufnahme 3 stellt damit ein fest an der Vorrichtung 1 vorgesehenes Behälterteil 56 dar.

Es versteht sich, dass ein derartiges Behälterteil 56 aber auch auswechselbar an der Vorrichtung 1 bereitgestellt werden kann, beispielsweise als Spritzguss gefertigtes Wannenteil (hier nicht gezeigt), welches in das Trageteil 50 beispielsweise auswechselbar eingesetzt werden kann. In einer derartigen Ausführungsvariante wäre dann die Sammelaufnahme 3 bzw. das entsprechende Behälterteil 56 auswechselbar an der Vorrichtung 1 bereitgestellt, so dass eine befüllte Sammelaufnahme 3 aus der Vorrichtung 1 auch entnommen werden und durch eine leere Sammelaufnahme 3 ersetzt werden könnte, so dass die Arbeiten mit der Vorrichtung 1 zum Sammeln von Kehricht fortgesetzt werden können, während die zuvor entnommene Sammelaufnahme 3 zwischenzeitlich wird.

Es versteht sich, dass eine derartige auswechselbare Sammelaufnahme 3 durch ein spritzgegossenes Wannenteil starr ausgestaltet werden kann.

Es ist aber auch möglich, dass die Sammelaufnahme 3 bzw. ein diesbezügliches Behälterteil 56 klappbar ausgestaltet sein kann, um zumindest im leeren Zustand besser transportiert werden zu können.

Jedenfalls ist die in den Figuren 1 bis 3 gezeigte Vorrichtung 1 so eingerichtet, dass das Rahmenteil 4 einerseits mit der Gelenkeinrichtung 21 gelenkig an der Vorderseite 12 der Sammelaufnahme 3 angeschlagen ist und das Rahmenteil 4 andererseits mit einem der Gelenkeinrichtung 21 gegenüberliegenden Ende 41 an dem Griffteil 5 derart betätigbar ist, dass beim Anheben der Vorrichtung 1 die Vorderseite 12 der Sammelaufnahme 3 immer vor der Rückseite 13 der Sammelaufnahme 3 von dem Untergrund 11 abgehoben wird, um zu vermeiden, dass aus der Sammelaufnahme 3 unbeabsichtigt Kehricht herausfällt, wenn mit der Vorrichtung 1 weitergefahren wird.

Besonders vorteilhaft ist es, dass an dem Rahmenteil 4 die Radachse 37 ortsfest an dem Rahmenteil 4 angeordnet ist, wobei ein erster Hebelarm 70 des Rahmenteils 4 sich von dem Griffteil 5 bis zu dem Drehpunkt 63 erstreckt und wobei ein zweiter Hebelarm 71 des Rahmenteils 4 sich von einer Gelenkeinrichtung 21 an der Vorderseite 12 der Sammelaufnahme 3 bis zu dem Drehpunkt 63 der Radachse 37 erstreckt. Hierdurch ist es möglich, die Sammeleinrichtung 3 immer erst an ihrer Vorderseite 21 anzuheben, wenn man mit der Vorrichtung 1 beispielsweise weiterfahren möchte.

Eine weitere besonders bevorzugte, hier jedoch nicht näher gezeigte Ausführungsvariante sieht vor, dass die Sammelaufnahme 3 ein Sackteil (hier nicht gezeigt) umfasst. Dieses Sackteil ist vorteilhafterweise zusammenfaltbar, so dass es insbesondere für Transportzwecke im geleerten Zustand signifikant hinsichtlich seines Raumvolumens reduziert werden kann.

Beispielsweise kann dieses Sackteil in die in den Figuren 1 bis 3 gezeigte Sammelaufnahme 3 zusätzlich eingelegt werden.

Ist das Sackteil dann nach getaner Kehrarbeit mit Kehricht gefüllt, kann es ganz einfach aus der Sammelaufnahme 3 entnommen und durch ein leeres weiteres Sackteil ersetzt werden.

Es ist jedoch auch möglich, dass bei entsprechender Ausgestaltung der Sammelaufnahme 3 bzw. des Trageteils 50 es mittels geeigneter Befestigungsmittel, wie etwa Hakenelemente, Einhakösen, Klettverbindern oder dergleichen, möglich ist, das Sackteil auch nur in das Trageteil 50 als Aufhängevorrichtung einzuhängen, so dass die Vorrichtung 1 konstruktiv und gewichtsmäßig noch einfacher bereitgestellt werden kann.

Bei dem gemäß der Darstellung nach der Figur 1 gezeigten Fahrzustand, ist die Vorrichtung 1 an dem Griffteil 5 händig gepackt, so dass die Vorrichtung 1 nur mittels der Räder 7 Kontakt zu dem Untergrund 11 hat und somit leicht über dem Untergrund 11 geführt werden kann.

Zum Überführen der Vorrichtung 1 von diesem Fahrzustand in den in der Figur 3 gezeigten Arbeitszustand wird die Vorrichtung 1 in diesem Ausführungsbeispiel gemäß der Darstellung der Figur 2 mit der Rückseite 13 der Sammelaufnahme 3 erst einmal auf den Untergrund 11 abgestellt, wodurch die Vorrichtung 1 insgesamt gegen ein unbeabsichtigtes Weiterfahren bzw. Weiterrollen gesichert ist.

Nun wird die Sammelaufnahme 3 an ihrer Rückseite 13 mittels der Koppeleinrichtung 26 von dem Rahmenteil 4 bzw. das Rahmenteil 4 wird von der Sammelaufnahme 3 gelöst bzw. entkoppelt, indem die Rastnasenelemente 28 von dem Querbolzen 29 entrastet und nach unten verschwenkt werden, wodurch der die beiden Stangenelemente 35 verbindende Querbolzen 29 freigegeben wird.

Hierdurch lassen sich die beiden Stangenelemente 35 an den Griffteilen 5 nun frei um die Radachsen 37 gemäß der Schwenkrichtung 60 nach oben schwenken, so dass sich die Sammelaufnahme 3, insbesondere die andere Sammelaufnahmeseite 44, weiter in Richtung 45 auf den Untergrund 11 zu bewegen kann.

Durch den gewählte s-förmigen Verlauf der beiden Stangenelemente 35 und der Anordnung der Radachsen 37 in etwa auf zwei Drittel der Strecke zwischen Gelenkeinrichtung 21 und Koppeleinrichtung 26 können günstige Hebelverhältnisse am Rahmenteil 4 realisiert werden, wodurch die Sammelaufnahme 3 mit ihrer Vorderseite 12 sehr gut kontrolliert bis auf den Untergrund 11 abgesetzt werden kann, bis sich die Vorrichtung 1 bzw. deren Sammelaufnahme 3 letztendlich in dem in der Figur 3 gezeigten Arbeitszustand befindet.

Ist der Sammelvorgang, beispielsweise an einem zuvor zusammengekehrten Laubhaufen oder dergleichen, beendet, wird die Vorderseite 12 der Sammelaufnahme 3 durch Hinunterführen des Griffteils 5 in zu der Richtung 45 entgegengesetzter Richtung (nicht explizit eingezeichnet) nach oben verlagert und die Koppeleinrichtung 26 wird wieder eingekoppelt.

Damit ist die Sammelaufnahme 3 sowohl an der Gelenkeinrichtung 21 als auch an der Koppeleinrichtung 26 wieder mit dem Rahmenteil 4 fest verbunden, so dass auch die Rückseite 13 der Sammelaufnahme 3 durch Anheben des Rahmenteils 4 im Bereich des Griffteils 5 von dem Untergrund 11 wieder abgehoben werden kann, so dass die Vorrichtung 1 insgesamt weiter bewegt werden kann, etwa in Vorwärtsfahrtrichtung 10.

Somit wird zum Überführen der Vorrichtung 1 von dem Fahrzustand in den Arbeitszustand folgendes Verfahren durchgeführt, bei welchem mittels einer ersten Rotationsbewegung des Rahmenteils 4 der Vorrichtung 1 in eine erste Rotationsrichtung 61 um eine Rotationsachse bzw. um die Radachse 37 herum eine erste Sammelaufnahmeseite 43, nämlich die Rückseite 13, auf dem Untergrund 11 abgesetzt wird, bei welchem dann das Rahmenteil 4 im Bereich der ersten Sammelaufnahmeseite 43 bzw. Rückseite 13 von der Sammelaufnahme 3 entkoppelt wird, und bei welchem anschließend mittels einer weiteren Rotationsbewegung des Rahmenteils 4 in eine der ersten Rotationsrichtung 61 entgegengesetzten, weiteren Rotationsrichtung 62 um die Rotationsachse bzw. Radachse 37 eine zweite bzw. die andere Sammelaufnahmeseite 44, nämlich die Vorderseite 12, ebenfalls auf den Untergrund 11 abgesetzt wird, während die erste Sammelaufnahmeseite 43 bzw. die Rückseite 13 bereits auf dem Untergrund 11 abgesetzt ist.

Hierbei wird mittels des Rahmenteils 4 die Sammelaufnahme 3 um einen ersten Drehpunkt 63, nämlich um eine Radachse 37 der Vorrichtung 1, gedreht, um hierdurch die erste Sammelaufnahmeseite 43 auf dem Untergrund 11 abzusetzen, und anschließend um einen weiteren Drehpunkt 64, nämlich um ein zwischen der Sammelaufnahme 3 und dem Untergrund 11 wirkendes Untergrundauflager 65, gedreht, um eine der ersten Sammelaufnahmeseite 43 gegenüberliegende, andere Sammelaufnahmeseite 44 zusätzlich auf dem Untergrund 11 abzusetzen, wobei dieser weitere Drehpunkt 64 durch Absetzen der ersten Sammelaufnahmeseite 43 auf dem Untergrund 11 erzeugt wird.

Insofern wird die zwischen der Sammelaufnahme 3 und dem Rahmenteil 4 wirkende Gelenkeinrichtung 21 in Richtung 45 des Unterbodens abgesenkt, wenn bereits eine Sammelaufnahmeseite 43, nämlich im vorliegenden Ausführungsbeispiel die Rückseite 13, der Sammelaufnahme 3 auf dem Untergrund 11 abgesetzt wurde.

Somit wird die übliche Neigung 47 des Bodenelements 51 der Sammelaufnahme 3 gegenüber einer Horizontalen 48 bzw. gegenüber dem Untergrund 11 weiter verringert, wenn zuvor eine Sammelaufnahmeseite 43, nämlich die Rückseite 13, der Sammelaufnahme 3 bereits auf dem Untergrund 11 abgesetzt wurde.

Es versteht sich, dass bei geeigneter Ausgestaltung insbesondere des Rahmenteils 4 gegebenenfalls auch zuerst die Vorderseite 12 in Richtung 55 des Untergrunds 11 abgesenkt und erst dann anschließend die Rückseite 13 der Sammelaufnahme 3 in Richtung 45 des Untergrunds 11 abgesenkt werden kann.

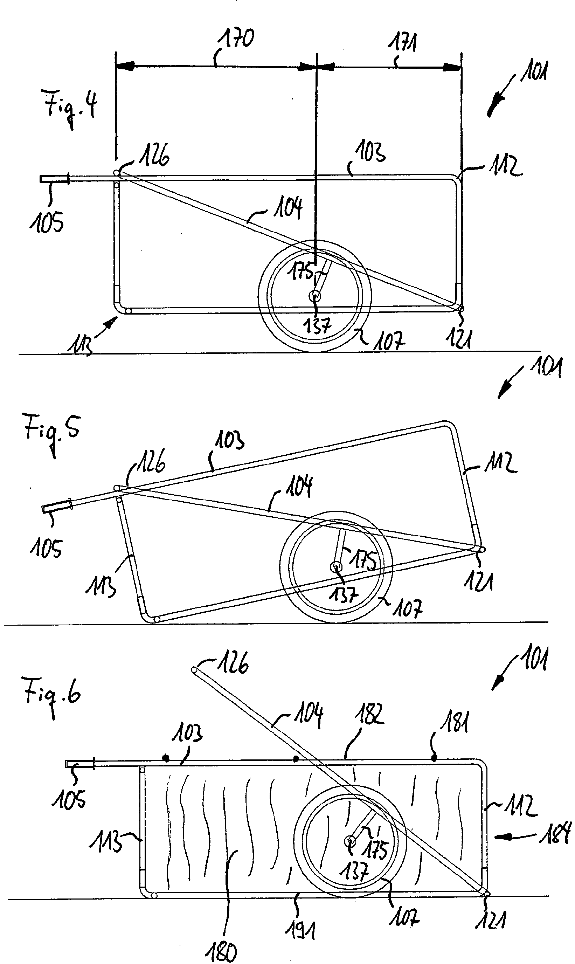

Bei der in den Figuren 4 bis 8 gezeigten alternativen Vorrichtung 101 handelt es sich um ein weiteres Ausführungsbeispiel einer Laubkarre 102, welche baulich im Wesentlichen mit der in den Figuren 1 bis 3 gezeigten Vorrichtung 1 übereinstimmt, so dass nachfolgend im Wesentlichen nur die Unterschiede zwischen der alternativen Vorrichtung 101 und der Vorrichtung 1 aus den Figuren 1 bis 3 beschrieben sind. Insofern wird hinsichtlich des Aufbaus und der Funktion der alternativen Vorrichtung 101 auf die Beschreibung der Vorrichtung 1 verwiesen, um auch Wiederholungen zu vermeiden.

Die Vorrichtung 101 weist jedenfalls ein Rahmenteil 104 auf, welches mit der Gelenkeinrichtung 121 gelenkig an der Vorderseite 112 der Sammelaufnahme 103 gelagert ist.

An dem Rahmenteil 104 ist die Radachse 137 der Räder 107 mittels einer starren Trägerstange 175 ortsfest an dem Rahmenteil 104 befestigt, wobei die Radachse 137 nach wie vor den ersten Drehpunkt 163 definiert.

Der Unterschied hierbei liegt jedoch darin, dass bei der Vorrichtung 101 das Griffteil 105 der Sammeleinrichtung 103 zugeordnet ist, und nicht mehr dem Rahmenteil 104.

Insofern erstreckt sich der erste Hebelarm 170 von der lösbaren Koppeleinrichtung 126 bis zu dem Drehpunkt 163 und der zweite Hebelarm 171 von der Gelenkeinrichtung 121 an der Vorderseite 112 der Sammelaufnahme 103 bis zu dem Drehpunkt 163 der Radachse 137.

In der Sammelaufnahme 103 ist ein begehbares Sackteil 180 (nur schematisch in Figur 6 angedeutet) an insgesamt sechs Aufhängungspunkten 181 (nur exemplarisch beziffert) der Sammelaufnahme 103 angeordnet. Nach unten hin wird das begehbare Sackteil 180 durch ein hier nicht gezeigtes Metallgitter unterfangen.

So kann man problemlos in das Sackteil 180 einsteigen und den Kehricht bedarfsweise verdichten.

Um ein Begehen des Sackteils 180 besser und vollständiger zu ermöglichen, verfügt das Sackteil 180 an seiner Längsseite 182 über wenigstens eine Verschlusseinrichtung 183, welche einen oder mehrere Reißverschlüsse aufweisen kann.

Somit ist das Sackteil 180 neben seiner vorderen Öffnung 184 bedarfsweise auch noch von seiner Längsseite 182 her zugänglich.

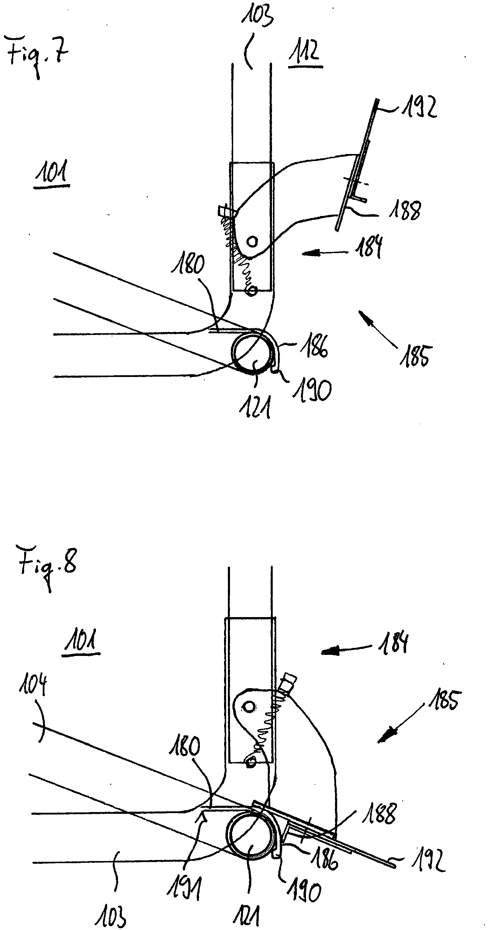

Damit das Sackteil 180 in der Sammelaufnahme 103 selbst beim Einkehren von Kehricht mit seiner vorderen Öffnung 184 zumindest temporär an der Vorderseite 112 festgelegt werden kann, ist an der Vorderseite 112 des Sammelaufnahme 103 eine entsprechende Klemmeinrichtung 185 zum Klemmen eines die Öffnung 184 des Sackteils 180 begrenzenden Randes 186 vorgesehen (vgl. auch Figuren 7 und 8).

Die Klemmeinrichtung 185 liegt also der Rückseite 113 der Sammelaufnahme 103 gegenüber.

Die Klemmeinrichtung 185 besitzt eine schwenkbare Klemmleiste 188, welche schwenkbar an der Vorderseite 112 der Sammelaufnahme 103 angeordnet ist.

Die schwenkbare Klemmleiste 188 ist hierbei federvorgespannt, so dass sie im geöffneten Zustand der Klemmeinrichtung 185 in Öffenposition gehalten wird (vgl. Figur 7).

Ist das Sackteil 180 ordnungsgemäß in der Sammelaufnahme 103 angeordnet, schließt die Klemmeinrichtung 185 und der Rand 186 der Öffnung 184 des Sackteils 180 wird zwischen der Klemmleiste 188 und der Sammelaufnahme 103 eingeklemmt.

Damit der Rand 186 des Sackteils 180 nicht unbeabsichtigt aus der Klemmeinrichtung 185 herausrutsch, beispielsweise beim Einkehren von Kehricht, ist der Rand 186 der Öffnung 184 des Sackteils 180 noch mit einem Klemmelement 190 verstärkt.

Das Klemmelement 190 befindet sich hierbei an einer der Verschlusseinrichtung 183 gegenüberliegenden Sackteilseite 191, so dass stets klar ist, wie das Sackteil 180 in der Sammelaufnahme einzulegen ist.

In dieser Klemmposition (vgl. Figur 8) wird die schwenkbare Klemmleiste 188 ebenfalls federvorgespannt gehalten, so dass ein versehentliches Lösen des Randes 186 aus der Klemmeinrichtung 185 nahezu ausgeschlossen werden kann.

An der Klemmeinrichtung 185 ist sogleich noch eine Gummilippenleiste 192 als Einkehrhilfe angebracht.

### Liste der verwendeten Bezugszeichen

- 1: Vorrichtung
- 2: Laubkarre
- 3: Sammelaufnahme
- 4: Rahmenteil
- 5: Griffteil
- 6: Fahrwerk
- 7: Räder
- 10: Vorwärtsfahrrichtung
- 11: Untergrund
- 12: Vorderseite
- 13: Rückseite bzw. gegenüberliegende Seite
- 14: rechte Seite
- 15: linke Seite
- 16: Unterseite
- 17: Oberseite
- 20: Bereich
- 21: Gelenkeinrichtung
- 22: Bolzen-Naben-Verbindung
- 25: weiterer Bereich
- 26: Koppeleinrichtung
- 27: Flanschteile
- 28: Rastnasenelemente
- 29: Querbolzen
- 35: Stangenelemente
- 36: untere Wendestelle
- 37: Radachse
- 38: Einzelradaufhängung
- 39: weitere Wendestelle
- 40: bauteilfreier Raum
- 41: gegenüberliegendes Ende
- 42: anderes Ende
- 43: erste Sammelaufnahmeseite
- 44: andere Sammelaufnahmeseite
- 45: Richtung
- 46: weiter reduzierte Neigung
- 47: übliche, normale Neigung
- 48: Horizontale
- 50: Trageteil
- 51: Bodenelement
- 52: Seitenwandelemente
- 53: Vorderseitenwandelement
- 54: Rückseitenwandelement
- 55: Pfeilrichtung
- 56: Behälterteil
- 60: Schwenkrichtung
- 61: erste Rotationsrichtung
- 62: weitere Rotationsrichtung
- 63: erster Drehpunkt bzw. erstes Drehlager
- 64: weiterer Drehpunkt bzw. weiteres Drehlager
- 65: Untergrundauflager an der Vorrichtung 1
- 70: erster Hebelarm
- 71: zweiter Hebelarm

- 101: alternative Vorrichtung
- 102: Laubkarre
- 103: Sammelaufnahme
- 104: Rahmenteil
- 105: Griffteil
- 107: Räder
- 112: Vorderseite
- 113: Rückseite
- 121: Gelenkeinrichtung
- 126: lösbaren Koppeleinrichtung
- 137: Radachse
- 163: erster Drehpunkt bzw. erstes Drehlager
- 170: erster Hebelarm
- 171: zweiter Hebelarm
- 175: Trägerstange
- 180: Sackteil
- 182: Längsseite
- 183: Verschlusseinrichtung
- 184: vordere Öffnung
- 185: Klemmeinrichtung
- 186: Rand
- 188: Klemmleiste
- 190: Klemmelement
- 191: gegenüberliegende Sackteilseite
- 192: Gummilippenleiste

## Patentansprüche

1. Vorrichtung (1, 2; 101) zum Sammeln von Kehricht, insbesondere von Laub, oder dergleichen mit einer Sammelaufnahme (3; 103) zum Aufnehmen von Kehricht, mit einem Rahmenteil (4; 104) umfassend ein Griffteil (5; 105) zum händischen Anheben und Führen der Vorrichtung (1, 2; 101) und/oder umfassend eine lösbaren Koppeleinrichtung (26; 126), und mit Rädern (7; 107) zum Fahren der Vorrichtung (1, 2; 101) auf einem Untergrund (11), bei welcher die Sammelaufnahme (3; 103) mittels einer Gelenkeinrichtung (21; 121) gelenkig mit dem Rahmenteil (4; 104) verbunden ist und bei welcher die Sammelaufnahme (3; 103) eine dem Griffteil (5; 105) abgewandte Vorderseite (12; 112) sowie eine dem Griffteil (5; 105) zugewandte Rückseite (13; 113) aufweist, ***dadurch gekennzeichnet, dass*** die Vorrichtung (1, 2; 101) dazu eingerichtet ist, dass die Sammelaufnahme (3; 103) sowohl mit ihrer Vorderseite (12; 112) als auch mit ihrer Rückseite (13; 113) in Richtung (45) des Untergrunds (11) bis auf Bodenniveau absenkbar ist.

2. Vorrichtung (1, 2; 101) nach Anspruch 1, ***dadurch gekennzeichnet, dass*** das Rahmenteil (4; 104) einerseits mit der Gelenkeinrichtung (21; 121) gelenkig an der Vorderseite (12; 112) der Sammelaufnahme (3; 103) angeschlagen ist und das Rahmenteil (4; 104) andererseits mit einem der Gelenkeinrichtung (21; 121) gegenüberliegenden Ende (41) an dem Griffteil (5; 105) derart betätigbar ist, dass beim Anheben der Vorrichtung (1, 2; 101) die Vorderseite (12; 112) der Sammelaufnahme (3; 103) immer vor der Rückseite (13; 113) der Sammelaufnahme (3; 103) von dem Untergrund (11) abhebbar ist.

3. Vorrichtung (1, 2; 101) nach Anspruch 1 oder 2, ***dadurch gekennzeichnet, dass*** das Rahmenteil (4; 104) an dem der Gelenkeinrichtung (21; 121) gegenüberliegenden Ende (41) mittels der lösbaren Koppeleinrichtung (26; 126) an der Rückseite (13; 113) der Sammelaufnahme (3; 103) koppelbar sowie von der Rückseite (13; 113) der Sammelaufnahme (3; 103) entkoppelbar ist.

4. Vorrichtung (1, 2; 101) nach einem der Ansprüche 1 bis 3, ***dadurch gekennzeichnet, dass*** die zwischen der Sammelaufnahme (3; 103) und dem Rahmenteil (4; 104) wirkende lösbare Koppeleinrichtung (26; 126) derart ausgestaltet ist, dass bei gelöster Koppeleinrichtung (26; 126) das Rahmenteil (4; 104) mit seinem der Gelenkeinrichtung (21; 121) gegenüberliegenden erstes Ende (41) bis über die Sammelaufnahme (3; 103) anhebbar ist.

5. Vorrichtung (1, 2; 101) nach einem der Ansprüche 1 bis 4, ***dadurch gekennzeichnet, dass*** die Vorrichtung (1, 2; 101) bzw. die Sammelaufnahme (3; 103) zwei voneinander unabhängige Drehlager (63, 64; 163) umfasst, um welche herum die Sammelaufnahme (3; 103) drehbar ist, wobei das erste Drehlager (63; 163) eine Radachse (37; 137) der Vorrichtung (1, 2; 101) und das weitere Drehlager (64) ein an der Sammelaufnahme (3; 103) ausgebildetes Untergrundauflager (65) umfasst.

6. Vorrichtung (1, 2; 101) nach einem der Ansprüche 1 bis 5, ***dadurch gekennzeichnet, dass*** an dem Rahmenteil (4; 104) eine Radachse (37; 137) der Räder (7; 107) der Vorrichtung (1, 2; 101) ortsfest angeordnet ist, wobei die Radachse (37; 137) einen ersten Drehpunkt (63; 163) der Vorrichtung (1, 2; 101) ist, wobei der erste Drehpunkt (63; 163) das Rahmenteil (4; 104) in einen ersten Hebelarm (70; 170) und in einen zweiten Hebelarm (71; 171) unterteilt, wobei der erste Hebelarm (70; 170) sich von dem Griffteil (5; 105) und/oder der lösbaren Koppeleinrichtung (26; 126) bis zu dem Drehpunkt (63; 163) erstreckt und wobei der zweite Hebelarm (71; 171) sich von einer Gelenkeinrichtung (21; 121) an der Vorderseite (12; 112) der Sammelaufnahme (3; 103) bis zu dem Drehpunkt (63; 163) der Radachse (37; 137) erstreckt.

7. Vorrichtung (1, 2; 101) nach einem der Ansprüche 1 bis 6, ***dadurch gekennzeichnet, dass*** das Rahmenteil (4; 104) derart gegenüber der Sammelaufnahme (3; 103) angeordnet ist, dass das Griffteil (5; 105) und/oder der lösbaren Koppeleinrichtung (26; 126) bis über die Sammelaufnahme (3; 103) angeordnet ist, während die an dem Rahmenteil (4; 104) gelenkig befestigte Seite (12, 44) der Sammelaufnahme (3; 103) auf dem Untergrund (11) abgesetzt ist.

8. Vorrichtung (1, 2; 101) nach einem der Ansprüche 1 bis 7, ***dadurch gekennzeichnet, dass*** die zwischen der Sammelaufnahme (3; 103) und dem Rahmenteil (4; 104) wirkende lösbare Koppeleinrichtung (26; 126) derart ausgestaltet ist, dass bei gelöster Koppeleinrichtung (26; 126) das Rahmenteil (4; 104) mit seinem der Gelenkeinrichtung (21; 121) gegenüberliegenden erstes Ende (41) bis über die Sammelaufnahme (3; 103) anhebbar ist.

9. Sammelaufnahme (3; 103) zum Sammeln von Kehricht, insbesondere von Laub, mit einem Sackteil (180), wobei das Sackteil (180) Befestigungsmittel (190) umfasst, mittels welchem das Sackteil (180) fest, aber lösbar in eine Vorrichtung (1, 2; 101) zum Sammeln von Kehricht, insbesondere nach einem der vorhergehenden Ansprüche, integrierbar ist.

10. Vorrichtung (1, 2; 101) oder Sammelaufnahme (3; 103) nach einem der vorhergehenden Ansprüche, ***gekennzeichnet durch*** ein begehbares Sackteil (180), um darin befindliches Kehricht oder dergleichen manuell zu verdichten.

11. Vorrichtung (1, 2) oder Sammelaufnahme (3; 103) nach einem der vorhergehenden Ansprüche, ***dadurch gekennzeichnet, dass*** die Sammelaufnahme (3; 103) ein Bodenelement (51) aus einem Draht- und/oder Netzgeflecht aufweist.

12. Vorrichtung (1, 2) oder Sammelaufnahme (3; 103) nach einem der vorhergehenden Ansprüche, ***gekennzeichnet durch*** eine Klemmeinrichtung (185) zum Klemmen eines eine Öffnung (184) des Sackteils (180) begrenzenden Randes (186) des Sackteils (180), wobei die Klemmeinrichtung (185) eine schwenkbare Klemmleiste (188) umfasst, welche schwenkbar an der Vorderseite (12; 112) der Sammelaufnahme (3; 103) angeordnet ist.

13. Vorrichtung (1, 2) oder Sammelaufnahme (3; 103) nach einem der vorhergehenden Ansprüche, ***dadurch gekennzeichnet, dass*** das Sackteil (180) an einem eine Öffnung (184) des Sackteils (180) begrenzenden Randes (186) des Sackteils (180) ein Klemmelement (190) aufweist, wobei insbesondere das Sackteil (180) an einer dem Klemmelement (190) gegenüberliegenden Sackteilseite (182) ein oder mehrere Verschlusseinrichtungen (183) zum zusätzlichen Öffnen des Sackteils (180) aufweist.

14. Verfahren zum Aufsammeln von Kehricht oder dergleichen in einer Sammelaufnahme (3; 103) einer auf einem Untergrund (11) fahrbaren Karre (1, 2), bei welchem mittels einer ersten Rotationsbewegung eines Rahmenteils (4; 104) der Karre (1, 2) in eine erste Rotationsrichtung (61) um eine Rotationsachse, insbesondere um eine Radachse (37; 137), des Karrens (1, 2) eine erste Sammelaufnahmeseite (13; 113) auf dem Untergrund (11) abgesetzt wird, bei welchem dann das Rahmenteil (4; 104) im Bereich der ersten Sammelaufnahmeseite (12, 13; 112, 113) von der Sammelaufnahme (3; 103) entkoppelt wird, und bei welchem anschließend mittels einer weiteren Rotationsbewegung des Rahmenteils (4; 104) in eine der ersten Rotationsrichtung (61) entgegengesetzte, weitere Rotationsrichtung (62) um die Rotationsachse, insbesondere Radachse (37; 137), eine zweite Sammelaufnahmeseite (12, 13; 112, 113) ebenfalls auf dem Untergrund (11) abgesetzt wird, während die erste Sammelaufnahmeseite (12, 13; 112, 113) bereits auf dem Untergrund (11) abgesetzt ist.

15. Verfahren nach Anspruch 14, ***dadurch gekennzeichnet, dass*** mittels des Rahmenteils (4; 104) die Sammelaufnahme (3; 103) um einen ersten Drehpunkt (63; 163), nämlich um eine Radachse (37; 137) des Karrens (1, 2), gedreht wird, um hierdurch die erste Sammelaufnahmeseite (43), nämlich die Rückseite (13) der Sammelaufnahme (3; 103), auf dem Untergrund (11) abzusetzen, und anschließend um einen weiteren Drehpunkt (64), nämlich um ein zwischen der Sammelaufnahme (3; 103) und dem Untergrund (11) wirkendes Untergrundauflager (65), drehbar ist, um eine der ersten Sammelaufnahmeseite (43) gegenüberliegende, andere Sammelaufnahmeseite (44), nämlich die Vorderseite (12; 112) der Sammelaufnahme (3; 103), zusätzlich auf dem Untergrund (11) abzusetzen, wobei dieser weitere Drehpunkt (64) durch Absetzen der ersten Sammelaufnahmeseite (43) auf dem Untergrund (11) erzeugt wird.
